# EUROPEAN PATENT SPECIFICATION

(11) **EP 0 549 861 B1**
(45) Date of publication and mention of the grant of the patent: **10.09.1997**
(21) Application number: 92117424.9
(22) Date of filing: 12.10.1992
(51) Int. Cl.: C10L 5/00, C10L 5/40, C10L 5/46

(54) **A method and a plant for manufacturing a fuel product by drying a mixed product consisting of sludge and an inflammable material**
Verfahren und Anlage zur Herstellung eines Brennstoffs durch Trocknung einer Mischung von Klärschlamm und entflammbares Produkt
Procédé et installation pour la fabrication d'un combustible par séchage d'un mélange de boue et d'un produit inflammable

(30) Priority: 14.10.1991 DK 1734/91
(43) Date of publication of application: 07.07.1993
(73) Proprietor: LA COUR ADMINISTRATION A/S ( PINDSTRUP FODERINDUSTRI A/S), 8544 Morke (DK)
(72) Inventor: La Cour, Hans Henrik, DK-8544 Morke (DK)
(74) Representative: Nielsen, Leif

(56) References cited:
- DE-A- 2 436 267
- DE-A- 3 842 138
- DE-A- 3 926 996
- DE-A- 4 011 400

## Description

The present invention relates to a method for manufacturing a fuel product by drying a sludge which is drained to a dry matter content of at least 15-30%, and which prior to the drying is mixed with an inflammable material, having a lower water content than the sludge, to a composite product, which by use of a drying plant is dried to a desired dry matter content by heating, wherein the inflammable material is triturated before it is mixed with the sludge, and wherein the composite product is crumbled.

Methods are known where drained sewage sludge, sludge from purifying plants, and other forms of raw slurry are dried by use of heat in drying plants. An example of treating sludge as mentioned introductorily is known from DK-B-125,696. Usually such plants are made in such a way that the dried sludge is burned and is used as a source of energy for the drying of the raw slurry, or the sludge is only dried in the used plant. In the latter case, the dried product may be burned in a waste refuse destructor plant or the like.

The known methods for combined drying and combustion of sludge is effected by use of plants which cannot be used for other drying or combustion purposes. The plants are located in connection with public sewage plants. Due to great variations in the physical and chemical composition of the sludge it is necessary to use costly technology and control which make the operations of the plants expensive. Accordingly, the known methods are expensive even though a limited surplus heat may be sold in some cases.

For instance from DE-A1-3,842,138 methods of the above-mentioned type are also known according to which the sludge is mechanically drained in such a degree that after a drying it may possibly be burned off together with refuse or another inflammable material in a waste refuse destructor plant.

As sludge may contain heavy metals the burning implies that smoke and ashes are checked, and in case some limits are exceeded, a purifying of smoke must be established, and the ashes may be deposited at supervised refuse dumps only.

Accordingly, it is usual that drained sludge containing such great amounts of heavy metals that the sludge neither may be used for agricultural purposes nor be burned without expensive smoke purifying equipment, is deposited at supervised refuse dumps. However, this solution is inconvenient as the refuse dumps have a limited capacity, and as the sludge depositing causes difficulties with the stability of the refuse.

For the time being drained sludge which only contains smaller amounts of heavy metals may be spread on plough land. However, already now a national legislation exists which imposes a limitation of the products that may be cultivated on such plough land. In other countries total prohibition exists against spreading of drained sludge on plough land.

It is the object of the present invention to provide an alternative removal of sludge by making the drained sludge into a fuel product. Hereby, the disadvantages connected with the spreading on plough land and the disadvantages connected with the prior art technique of drying and treating sludge may be remedied. This is achieved by providing a method which makes it possible to dry drained sludge in traditional drying plants for manufacturing a product that may be burned in existing, greater heating plants which either are provided with smoke purifying equipment and supervised ash depositing, or which have a current supervision of smoke and ashes.

In the present patent application the expression "traditional drying plants" is defined as drying plants, preferably in the form of rotary driers which by means of heating are made to dry a bio-mass; e.g. wet grass and lucerne for green powder or wet waste wood, for fuel or for use within the wood industry or the cellulose industry.

In the present patent application the expression "drained sludge" is defined as a raw slurry which is drained, preferably mechanically in filters or separators to a dry matter content from approximately 15% to approximately 35%.

If the drained sludge is introduced directly into a drying plant of the above-mentioned type the sludge will get lumpy. The rotation of the rotary drier will partly form sludge balls which only are dried on the surface, and partly a coat of sludge which sticks to the inside of the drum, and which therefore is dried up and ignited by the radiation heat from the heating means of the drum.

The object of the invention and the problem with the lumping are remedied by the method according to the invention, which method is characterized in that the drying plant used is of a drum type having heating means at one end, that the composite product is introduced into the drying plant in the immediate vicinity of its heating means, that the composite product is conveyed mechanically and pneumatically through the drying plant, and that the dried composite product is finally formed as a fuel product.

When crumbling the composite product it is possible to obtain a crumbled product which has a large surface, from where evaporation may occur approximately momentarily by the introduction into the drying plant. Accordingly, it is not possible for the crumbled product to get lumpy, and as it dries up it may be conveyed pneumatically or semi-pneumatically through the drying plant. The composite product obtained hereby may be conveyed through a traditional drying plant without risk of forming surfacedried sludge balls and formation of a coating.

The composite product which leaves the drying plant is finally formed to a suitable form for the fuel product which may be used in a traditional heating plant, e.g. a coal-burning plant which is provided with smoke purifying equipment for the separation of possible heavy metals and other particles.

It appears that heavy metals which are contained in the sludge will not leave the drying plant together with the drying air. The triturated inflammable material which is provided in the form of waste wood, waste paper, waste straw, peat mulch, or similar biomaterial having a large surface, will, together with the sludge, absorb a great deal of dust and gasses, in which possible heavy metals are present. This means that the method can advantageously be effected in a drying plant which does not comprise specific smoke purifying equipment.

The final formation of the dried composite product may advantageously be a grinding and pelletizing for making fuel pellets which typically have a water content of approximately 6%, and which easily may be handled as bulk cargo. The formed fuel pellets will substantially be sterile, partly because the composite product during passage through the drying plant typically is subject to a temperature of approximately 500-1100°C and is heated to the evaporating temperature (approximately 100°C), and partly because the frictional heat during the pelletizing raises the pelleted product to temperatures of between 70 and 100°C. The pellets keep this temperature for 5 to 10 minutes.

The volumetric proportion of mixture between sludge and inflammable material will typically be approximately 1:4 when the inflammable material used consists of moist waste wood. This waste wood is relatively inexpensive and has a dry matter content down to approximately 30-40%. Hereby, a particularly advantageous, initial, moisture content in the composite product is obtained which is desired to be dried by using a traditional rotary drier. With this dry matter content/-moisture content an evaporation from the composite product of approximately 12-13 kilograms water/kilograms fired fuel oil is obtained. This corresponds approximately to the energy consumption when the rotary drier is used for green drying. By way of comparison it may be mentioned that by drying pure waste wood with a dry matter content of approximately 40-50% a smaller evaporation of water per kilogram fired fuel oil is obtained. Thus, this will imply a lower efficiency of the rotary drier. Thus, with the composite product a higher efficiency for the plant will be obtained.

By using the method according to the invention it is possible to make use of the heat energy of the sludge in combination with the heat energy in another resource, e.g. waste wood, cut straw, or the like. Furthermore, possible heavy metals and other undesired substances which may appear in the form of vapour will be intercepted when the composite product is burned in large heating plants. Ashes and fly ashes from these heating plants will beforehand be deposited in accordance with particular regulations and will only make up a small percentage of the original drained sludge tonnage. An ash remainder of approximately 8-10% of the drained sludge tonnage or less may be obtained.

The dried composite product which is obtained from the method according to the invention will typically have a heating value of approximately 65% of the heating value for coal. As the product being used as bio-fuel moreover will be free of coal duties and CO₂ duties, it will be a competitive resource of fuel.

Every inflammable material which can be triturated may be used. Preferably, an inflammable material with lower moisture content than the drained sludge is used and which moreover is triturated in order to obtain a large absorbent surface. Such inflammable material will together with the sludge be suited for forming the crumbled composite product, said sludge being drained beforehand by means of a mechanical sludge press. Such crumbled composite product may be dried in a drying plant which is used for green drying, and which may also be used for other productions when it is not used for the drying of sludge.

In the present patent application the expression "crumbled material" is defined as a material consisting of small, separate particles which will not stick together.

The invention also relates to a plant for use in the above-mentioned method, and which comprises a compulsory mixer for mixing the sludge and the inflammable material to a crumbled mass, a rotary drier having a combined mechanical and pneumatical conveyance, and having heating means which may raise the temperature up to 500-1100°C, a grinding unit and a pelletizing unit which are arranged for receiving the dried composite product from the discharge end of the rotary drier. This plant consists advantageously of known units which do not require use of expensive, special structures.

Even though it is not specifically mentioned in connection with the explanation of the method or the plant, it is implicit that an optimizing of the degree of grinding of a dried product and the admixture of necessary pelletizing additives may occur. These additives may comprise friction regulating means and other additives which, however, will be obvious to a skilled in the art. Furthermore, it is noted that the invention is not limited to drying of sludge only, which comes from purifying plants. Thus, the invention may be used in connection with different forms of industrial sludge, as it also may be used in connection with sludge from animal husbandry.

The invention will now be further explained with reference to the accompanying schematic drawing which illustrates a plant for use in the working of the method according to the invention.

A rotary drier 1 provided with an oil burner 2 is used for drying the sludge. The sludge is conveyed to a mixer 4 as drained sludge 3 with a dry matter content from approximately 15 to 35%. An inflammable material 5 is also added to the mixer 4 which material may have a dry matter content down to 30-40%. The mixer 4 may be made of a per se well known molasses mixer which is provided with palettes which lead the introduced sludge and inflammable material 3,5 through the mixer 4 to an outlet 6 for the composite product. The sludge 3 and the inflammable material 5 are mixed in a ratio of volume of approximately 1:4. The composite product becomes crumbled during the passage through the mixer 4. The composite product is lead to a conveyor 7 where levelling takes place by means of a spike roller 8 and accordingly, an adjustment of the amount of composite product 9 introduced into the rotary drier 1, partly dependent on the capacity of the burner 2, and partly dependent on the subsequent production equipment.

At the inlet point 10 in the drier 1 the composite product 9 is exposed to a very powerful heating as the temperature in this area is up to approximately 500-1100°C. Hereby, an approximately momentary evaporation of the water from the composite product occurs which because of the crumbled condition, has a very large surface, from which the evaporation may occur. Hereby, the dried composite product is conveyed pneumatically and mechanically through the rotary drier. The pneumatic effect is obtained by means of a suction fan 11 which through a pipe 12 is connected with a cyclone 13, which again through a pipe 14 is connected with the rotary drier 1. In the rotary drier per se well known diaphragms and carriers are used which provide the mechanical transport. A separation occurs in the cyclone 13 and the dried composite product is removed from the bottom through a pipe 15. The pipe 15 leads to a grinding unit 16 which through a pipe 17, leads the dried and grinded composite product to a pelletizing unit 18. Subsequently, the pellets may be removed through the pipe 19 and be conveyed to a large heating plant as bulk cargo, e.g. a coal burning plant which is provided with smoke purifying equipment for the removal of possible heavy metals. The amount of vapour and air which is removed by the suction fan 11 will substantially be free of heavy metals and may be led out directly through a chimney 20.

### EXAMPLE

Hereinafter a non-limiting example is given on the conditions which appear in a specific plant according to the invention. The plant comprises a rotary drier 1 having a burner 2 which is dimensioned in order to remove 10 tons water/hour. Into the plant sludge and wet waste wood are filled in a proportion of mixture of 1:4 by volume, which by weight corresponds to a ratio of 1:1. The dry matter content of the sludge will be approximately 18.5% and the dry matter content of the waste wood will be approximately 50%. The evaporation capacity makes it possible to treat approximately 16 tons of crumbled composite product per hour.

Thus, the plant will be able to treat 8 tons sludge/hour. If such a plant has an effective working day of 23 hours the plant will be able to treat approximately 18,400 tons sludge/year in 100 working days, which substantially corresponds to the annual amount of sludge which is procured in a purifying plant which receives waste water from a city having approximately 75,000 inhabitants.

By burning the dried and pelletized composite product an ash remainder is obtained of approximately 88 kilograms/tons drained sludge which is discarded. The composite product has an ash percentage of 8-12% which corresponds to the ash percentage of coal. In other words, a burning of the product will not result in problems with ash depositing in comparison with burning of coal.

By burning the dried composite product a surplus of energy is obtained. Thus, calculations have shown that the heating value of the composite product represents an amount of energy which is approximately 3 times as large as the amount of energy used for mixing, drying, grinding, and pelletizing the product.

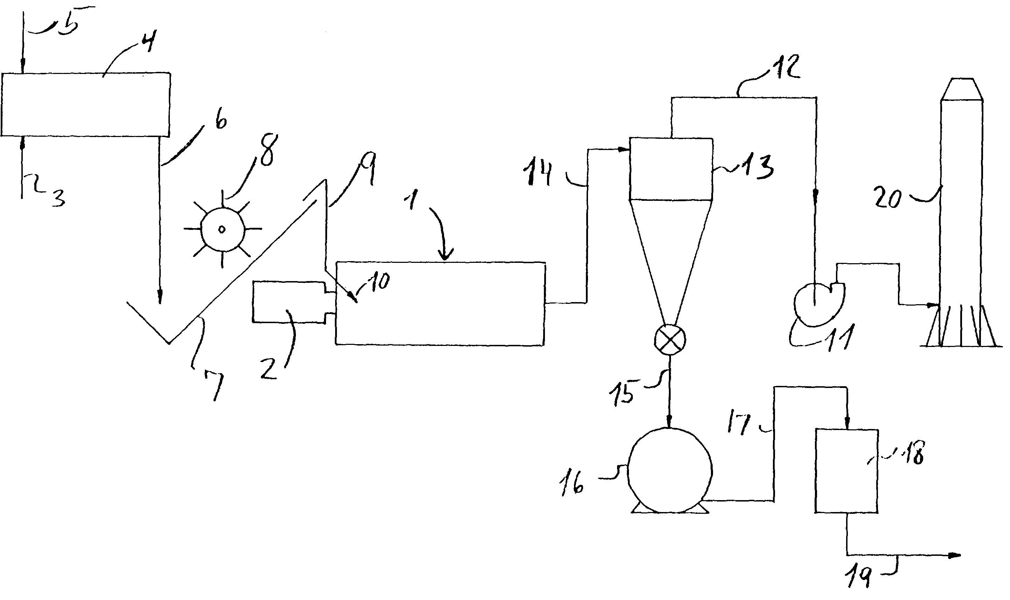

## Claims

1. Method for manufacturing a fuel product by drying a sludge which is drained to a dry matter content of at least 15-30%, and which prior to the drying is mixed with an inflammable material, having a lower water content than the sludge, to a composite product, which by use of a drying plant is dried to a desired dry matter content by heating, wherein the inflammable material is triturated before it is mixed with the sludge, and wherein the composite product is crumbled, **characterized** in that the drying plant used is of a drum type having heating means at one end, that the composite product is introduced into the drying plant in the immediate vicinity of its heating means, that the composite product is conveyed mechanically and pneumatically through the drying plant, and that the dried composite product is finally formed as a fuel product.

2. Method according to claim 1, **characterized** in that the composite product at the final forming comprises that the dried composite product is grinded and pelletized.

3. Method according to claims 1 or 2, **characterized** in that the sludge and the inflammable material are mixed in a volume ratio between sludge and material from 1:6 to 1:2, and preferably in a volume ratio of 1:4.

4. Method according to any one of the preceding claims, **characterized** in that the drying is effected at a temperature being up to a level between 500 to 1100°C.

5. Method according to any one of the preceding claims, **characterized** in that the composite product is dried to a water content of 4 to 12%, preferably 7.5%.

6. Method according to any one of the preceding claims, **characterized** in that the carrier material is chosen among biological materials such as waste wood in the form of sawdust or wood chips, triturated recycled paper, cut straw, cleaning of grain, peat mulch, and similar materials.

7. Plant for use in a method according to claim 1, which plant comprises a mixer for mixing the sludge and the inflammable material to a crumbled mass, a rotary drier having a combined mechanical and pneumatical conveyance, and having heating means which may raise the temperature up to 500-1100°C, a grinding unit and a pelletizing unit which are arranged for receiving the dried composite product from the discharge end of the rotary drier.

8. Plant according to claim 7, **characterized** in that the mixer consists of any per se known device for mixing molasses and dry matter for livestock feed.

## Patentansprüche

1. Verfahren zur Herstellung eines Brennstoffes durch Trocknen eines Schlamms, der zu einem Trokkenmassegehalt von mindestens 15-30% entwässert ist und der vor dem Trocknen mit einem brennbaren Material, das einen geringeren Wassergehalt als der Schlamm aufweist, zu einem Verbundprodukt vermischt wird, das unter Verwendung einer Trocknungsanlage durch Erhitzen zu einem gewünschten Trokkenmassegehalt getrocknet wird, wobei der brennbare Stoff, bevor er mit dem Schlamm vermischt wird, zerrieben wird und wobei das Verbundprodukt zerkrümelt wird, dadurch gekennzeichnet, daß die eingesetzte Trocknungsanlage vom Trommeltyp ist, mit einer Heizvorrichtung an einem Ende, das Verbundprodukt in die Trocknungsanlage in unmittelbarer Nähe der Heizvorrichtung eingeführt wird, das Verbundprodukt mechanisch und pneumatisch durch die Trocknungsanlage transportiert wird und das getrocknete Verbundprodukt schließlich zu einem Brennstoff geformt wird.

2. Verfahren nach Anspruch 1, dadurch gekennzeichnet, daß das Verbundprodukt beim Fertigformen Vermahlen und Pelletieren des getrockneten Verbundprodukts umfaßt.

3. Verfahren nach Ansprüchen 1 oder 2, dadurch gekennzeichnet, daß der Schlamm und das brennbare Material in einem Volumenverhältnis zwischen Schlamm und Material von 1:6 bis 1:2 und vorzugsweise in einem Volumenverhältnis von 1:4 vermischt werden.

4. Verfahren nach einem der vorangehenden Ansprüche, dadurch gekennzeichnet, daß das Trocknen bei einer Temperatur bis zu einem Maß zwischen 500 und 1100°C ausgeführt wird.

5. Verfahren nach einem der vorangehenden Ansprüche, dadurch gekennzeichnet, daß das Verbundprodukt zu einem Wassergehalt von 4 bis 12%, vorzugsweise 7,5%, getrocknet wird.

6. Verfahren nach einem der vorangehenden Ansprüche, dadurch gekennzeichnet, daß das Trägermaterial unter biologischen Materialien, wie Abfallholz in Form von Sägemehl oder Holzschnitzeln, zerriebenes Altpapier, Strohhäcksel, Abfälle der Getreidereinigung, Torfstreu und ähnliche Materialien, ausgewählt wird.

7. Anlage zur Verwendung in einem Verfahren nach Anspruch 1, wobei die Anlage einen Mischer zum Vermischen des Schlamms und des brennbaren Materials zu einer krümeligen Masse, einen Rotationstrockner mit einer kombinierten mechanischen und pneumatischen Fördervorrichtung und mit einer Heizvorrichtung, die die Temperatur bis zu 500-1100°C ansteigen lassen kann, eine Zerkleinerungseinheit und eine Pelletiereinheit, angeordnet zur Aufnahme des getrockneten Verbundprodukts vom Ausgabeende des Rotationstrockners, umfaßt.

8. Anlage nach Anspruch 7, dadurch gekennzeichnet, daß der Mischer aus einer beliebigen an sich bekannten Vorrichtung zum Vermischen von Melasse und Trockenmasse für Viehfutter besteht.

## Revendications

1. Méthode pour la fabrication d'un produit combustible par le séchage d'une boue qui est égouttée à une teneur d'extrait sec d'au moins 15-30% et qui, avant le séchage est mélangée avec une matière ignifiable à teneur d'humidité inférieure à celle de la boue, en un produit composé qui, par l'emploi d'une installation de séchage, est séché par la chaleur à une teneur désirée d'extrait sec, dans laquelle la matière ignifiable est malaxée avant d'être mélangée à la boue et dans laquelle le produit composé est effrité, **caractérisée** en ce que l'installation de séchage employée est un type à tambour ayant les moyens de chauffage à l'une de ses extrémités, en ce que le produit composé est introduit dans l'installation de séchage au voisinage immédiat de la zone de chauffage, en ce que le produit composé est avancé mécaniquement et pneumatiquement au travers de l'installation de séchage, et en ce que le produit composé séché est finalement formé comme un produit combustible.

2. Méthode selon la revendication 1, **caractérisée** en ce que la formation finale du produit composé comprend que le produit composé séché est concassé et mis en granulés.

3. Méthode selon les revendications 1 et 2, **caractérisée** en ce que la boue et la matière ignifiable sont mélangées en un rapport de volume entre la boue et la matière de 1:6 à 1:2, et de préférence dans le rapport 1:4.

4. Méthode selon l'une quelconque des revendications précédentes, **caractérisée** en ce que le séchage est effectué à une température pouvant atteindre entre 500 et 1.100 °C.

5. Méthode selon l'une quelconque des revendications précédentes, **caractérisée** en ce que le produit composé est séché à une teneur d'humidité de 4 à 12 %, de préférence à 7,5%.

6. Méthode selon l'une quelconque des revendications précédentes, **caractérisée** en ce que la matière de transport est choisie parmi des produits biologiques tels que déchets de bois sous forme de sciure ou de copeaux, du papier malaxé et recyclé, de la paille hachée, les déchets du nettoyage des grains, des paillis de tourbe et autres produits similaires.

7. Installation utilisée pour la méthode selon la revendication 1, laquelle installation comprend un mélangeur pour malaxer la boue et la matière ignifiable en une masse effritée, un séchoir rotatif ayant un transport combiné mécanique et pneumatique ainsi qu'un système de chauffage pouvant élever la température jusqu'à 500-1100 °C, une unité de concassage et une unité de granulation disposées pour recevoir le produit composé séché à l'extrémité de sortie du séchoir rotatif.

8. Installation selon la revendication 7, **caractérisée** en ce que le mélangeur consiste en l'un quelconque des dispositifs connus pour mélanger les mélasses et les matières sèches destinés aux aliments du bétail.
